# EUROPÄISCHE PATENTSCHRIFT

(11) **EP 1 024 706 B1**
(45) Veröffentlichungstag und Bekanntmachung des Hinweises auf die Patenterteilung: **05.06.2002**
(21) Anmeldenummer: 98956807.6
(22) Anmeldetag: 08.10.1998
(51) Int. Cl.: A23J 1/14, A23L 1/211

(54) **VERFAHREN ZUR BEHANDLUNG UND VERARBEITUNG ALKALOID-, ÖL- UND PROTEINHALTIGER LUPINENSAMEN**
METHOD FOR TREATING AND PROCESSING LUPINE SEEDS CONTAINING ALKALOID, OIL AND PROTEIN
PROCEDE DE TRAITEMENT ET DE TRANSFORMATION DE GRAINES DE LUPIN RENFERMANT DES ALCALOIDES, DES HUILES ET DES PROTEINES

(30) Priorität: 08.10.1997 DE 19744469; 25.03.1998 DE 19813207
(43) Veröffentlichungstag der Anmeldung: 09.08.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: WÄSCHE, Andreas, D-85416 Langenbach (DE); HOLLEY, Wolfgang, D-84079 Bruckberg (DE); LUCK, Thomas, D-80992 München (DE); NÜRRENBACH, Till, D-85221 Dachau (DE); BORCHERDING, Axel, D-80937 München (DE)
(86) Internationale Anmeldenummer: DE9802982
(87) Internationale Veröffentlichungsnummer: WO9917619

(56) Entgegenhaltungen:
- EP-A- 0 441 672
- WO-A-83/00419
- WO-A-97/12524
- TAHA F S ET AL: "Unconventional protein sources. I. Lupinus albus." AGRICULTURAL AND BIOLOGICAL CHEMISTRY, Bd. 46, Nr. 11, 1982, Seiten 2625-2629, XP002092195 Nat. Res. Cent., Dokki, Cairo, Egypt
- ORTIZ J G F ET AL: "Extraction of alkaloids and oil from bitter lupin seed." JOURNAL OF THE AMERICAN OIL CHEMISTS' SOCIETY, Bd. 59, Nr. 5, 1982, Seiten 241-244, XP002092196 Fed. Cent. for Lipid Res., Piusallee 68/76, D-4400 Münster, Federal Republic of Germany
- SMITH A.K., CIRCLE S.J.: "Soybeans. chemistry and technology" 1972 , THE AVI PUBLISHING COMPANY , WESTPORT, CONNECTICUT XP002092198 siehe Seite 97-98
- SNYDER, H.E., KWON T.W.: "Soybean Utilization" 1987 , VAN NOSTRAND REINHOLD COMPANY , NEW YORK XP002092199 siehe Seite 82-85
- HEIMANN M: "Flaking mill theory and operation." OIL MILL GAZETTEER, Bd. 101, Nr. 5, 1995, Seiten 32-37, XP002093358 Roskamp Div., California Pellet Mill Co., Waterloo, IA, USA
- STAHL E ET AL: "Extraktion von Lupineöl mit überkritischem Kohlendioxid." FETTE SEIFEN ANSTRICHMITTEL, Bd. 83, Nr. 12, 1981, Seiten 472-474, XP002092197 Univ. des Saarlandes, D-6600 Saarbrücken, Federal Republic of Germany

## Beschreibung

### Technisches Gebiet

Die Erfindung bezieht sich auf ein Verfahren zur Behandlung und Verarbeitung alkaloid-, öl- und proteinhaltiger Lupinensamen zur Gewinnung von Produkten aus den Lupinensamen mittels gezielter Fraktionierung.

### Stand der Technik

Proteine gelten als Rohstoffe für die Lebensmittel- und Futtermittelindustrie und finden vielfache Verwendung in der technischen Chemie, beispielsweise zur Herstellung von Klebstoffen, Emulsionen für photographische Schichten sowie Kosmetika, um nur einige zu nennen.

Da Proteine ein wesentlicher Bestandteil von Tieren und Pflanzen sind, stellen sie erneuerbare, native Rohstoffe dar, die im industriellen Maßstab beispielsweise aus Milch, Soja und Weizen gewonnen werden können. Von besonderer Bedeutung für die Proteingewinnung sind Lupinensamen, die in ihrer Zusammensetzung hinsichtlich Proteingehalt, Rohfaseranteil sowie Ölgehalt Sojabohnen ähneln. Der Lupinenanbau und die Verarbeitung von Lupinensamen zu gewünschten Proteinprodukten ist deshalb von besonderem Interesse, da Lupinen auch in Regionen angebaut werden können, die für Sojabohnen ungeeignet sind, wie beispielsweise in Westeuropa oder Australien.

Eine direkte Nutzung von Lupinenprodukten, insbesondere für Ernährungszwecke, ist aufgrund pflanzeneigener Bitterstoffe, den sogenannten Alkaloiden, eingeschränkt, bei den anbautechnisch vorteilhaften sogenannten Bitterlupinen sogar vollkommen ausgeschlossen. Bei der Verarbeitung von Lupinensamen ist es daher erforderlich, die Alkaloide zu enffernen, um Produkte für die Nutzung als Lebensmittel zu erhalten. Gleichzeitig können die extrahierten Alkaloide als Wirkstoffe gezielt in Landwirtschaft und Pharmazie eingesetzt werden, wodurch die vollständige Verwertung von Lupinen bzw. Bitterlupinen auch aus ökonomischer Sicht äußerst interessant ist.

So geht bereits aus der im Jahre 1931 veröffentlichten deutschen Patentschrift DE 537 265 ein Verfahren zur nutzbaren Verwertung von Lupinen unter Entbitterung durch stufenweise Extraktion mit wässrigen Lösungen hervor. Die Entbitterung wird mittels stufenweiser Extraktion im feuchten Zustand geschnitzelter Lupinen unter Säurezusatz mit anschließender Lösung der sich im Säurebad bildenden Salze durchgeführt.

Weiterhin geht aus der WO 83/00419 ein Verfahren und eine Vorrichtung zum Entzug der Bitterstoffe aus Bitterlupinensamen hervor, nachdem die Lupinen in feinstgemahlener Form mit unterschiedlich stark konzentrierten Lupinenextraktlösungen nach dem Gegenstromprinzip kalt ausgewaschen werden, wobei als Lösungsmittel Wasser verwendet wird.

Ein weiterentwickeltes Verfahren zur Entbitterung von Lupinensamen ist der WO 97/12524 zu entnehmen, das nach der Zerkleinerung der Lupinensamen auf grießartige Körner mit Durchmessern zwischen 200 und 600 µm zunächst eine thermische Wärmeeinwirkung auf die Pflanzensamen vorsieht, wodurch eine gezielte Inaktivierung von in den Pflanzensamen vorhandenen Enzymen erreicht wird. Die Wärmeeinwirkung erfolgt direkt mittels Blanchiertechnik, d.h. direktem Einbringen heißen Wasserdampfes in den zerkleinerten Samen. Nach dem Blanchiervorgang werden die Pflanzensamen einem aus zwei Schritten bestehenden Entbitterungsprozeß unterzogen, dessen erster Extraktionsschritt zur Abtrennung der Alkaloide sowie weiterer antinutritiver Stoffe führt. Hierzu werden die Pflanzensamen mit frischem Trinkwasser als Lösungsmittel in einem sauren Milieu im Rahmen einer Gegenstromextraktion vermischt. Der Mischvorgang kann vorzugsweise mehrstufig erfolgen, bis ein an antinutritiven Stoffen angereichertes Extrakt und ein extrahierbares Raffinat, das reich an Proteinen und Ballaststoffen ist, gewonnen wird. Das aus dem ersten Extraktionsschritt gewonnene Raffinat wird in einem zweiten Schritt mit Wasser als Lösungsmittel in einem alkalischen Milieu zugesetzt. Als Extraktionsergebnisse im zweiten Schritt wird ein an Ballaststoffen angereichertes Raffinat sowie eine mit Proteinen angereicherte Proteinmilch gewonnen.

Allen vorstehend beschriebenen Entbitterungsverfahren liegt ein gemeinsames Ziel zugrunde, nämlich zum einen die Gewinnung von Proteinen möglichst ein Reinstform und zum anderen möglichst vollständig entbitterte Ballaststoffe für die Lebensmitteloder Futtermittelindustrie zu erhalten.

Den vorstehend beschriebenen Verfahren haften jedoch auch diverse Nachteile an: Zum einen weisen Pflanzensamen und insbesondere Lupinensamen einen Ölgehalt von ca. 10 bis 15 % auf, in dem neben reinem Öl, beispielsweise Triglyzerin auch lipophile Nebenbestandteile enthalten sind, wie beispielsweise Karotinoide, Lecithine oder lipophile Alkaloide. Insbesondere letztere Bestandteile können mit den bekannten Entbitterungsverfahren nur unzureichend extrahiert werden, so daß in den entbitterten Endprodukten unvermeidbar lipophile alkaloidische Restbestandteile enthalten sind.

Zwar sieht das bekannte Verfahren gemäß WO 97/12524 eine dem Entbitterungsprozeß vorgeschaltete Inaktivierung der in den Pflanzensamen vorhandenen Enzyme vor, so daß ausgeschlossen werden kann, daß bei der Lagerung der entbitterten Verfahrensprodukte eine enzymatische Oxidation vorhandener ungesättigter Fettsäuren stattfindet, die beispielsweise zu einem ranzigen Geschmack führen würden, was für eine Verwendung im Lebensmittelbereich unvorteilhaft wäre, doch wird die Inaktivierung mittels Blanchieren vorgenommen, d.h. einer Beaufschlagung der Pflanzensamen mit heißem Wasserdampf, wodurch zum einen zwar die Enzyme inaktiviert, jedoch auch Speicherproteine unvermeidbar in Mitleidenschaft gezogen werden, daß sie ihre native Form und Eigenschaften verlieren.

Schließlich trägt auch die Formgebung der zerkleinerten Lupinensamen am Erfolg des Entbitterungsprozesses bei. So ist die in der WO 97/12524 vorgeschlagene Grießkornform insofern von Nachteil, da sie ein verhältnismäßig großes Volumen umschließt, aus dem die zu extrahierenden Einzelbestandteile entfernt werden müssen, d.h. je größer der Abstand vom Volumeninneren zur Außenseite eines jeden Grießkornes ist, umso weniger leicht gelangen die zu extrahierenden Stoffe aus den zu entbitternden, grießförmigen Lupinensamenbestandteile. Andererseits wird in der WO 83/00419 vorgeschlagen, die zu entbitternden Lupinensamen zu feinstem Mehl zu mahlen, mit Korngrößen zwischen 1 µm bis 50 µm, wodurch zwar die einzelnen Extraktionswege innerhalb eines "Staubkornes" sehr klein gehalten sind, doch entstehen durch das feine Vermahlen der Lupinensamen zu Mehl verfahrenstechnische Probleme beim Auftrennen zwischen flüssiger und fester Phase. Dies erfordert komplizierte und verfahrenstechnisch aufwendige Filtrationsschritte, die im industriellen Einsatz einen erheblichen Kosten- und Zeiffaktor bedeuten.

### Darstellung der Erfindung

Die Aufgabe der Erfindung besteht darin, ein Verfahren zur Behandlung und Verarbeitung alkaloid-, öl- und proteinhaltiger Lupinensamen zur Gewinnung von Produkten aus Lupinensamen mittels gezielter Fraktionierung derart anzugeben, daß die Produkte, Proteine in Reinstform sowie Ballaststoffe möglichst vollständig von Bitterstoffen befreit werden können, wobei die nacheinander durchzuführenden Verfahrensschritte mit möglichst geringem technischen Aufwand verbunden sein sollen. Zum einen ist insbesondere darauf zu achten, daß die zu behandelnden Proteine in ihrer nativen Form unverändert verbleiben sollen, während in den Lupinensamen enthaltene Enzyme inaktiviert werden insbesondere lipophile Alkaloide weitgehendst vollständig, auf möglichst schonende Weise, extrahiert werden sollen. Das Verfahren soll mit möglichst einfachen, aufeinander abgestimmten Prozeßschritten den bisher erreichten Grad an Entbitterung von Lupinensamen erheblich verbessern, bzw. den technischen Aufwand bei gleichem Entbitterungsergebnis erheblich verringern.

Erfindungsgemäß werden bei dem Verfahren zur Behandlung und Verarbeitung alkaloid-, öl- und proteinhaltiger Lupinensamen zur Gewinnung von Produkten aus den Lupinensamen, die sowohl reich, den sogenannten Bitterlupinen, oder arm an Bitterstoffen sein können, mittels gezielter Fraktionierung folgende Verfahrensschritte durchgeführt:

Zunächst werden die Lupinensamen geschält und die Schalen werden abgetrennt. Besonders vorteilhaft für die weiteren Verfharensschritte ist es, wenn die Lupinensamen vor oder während des Schälens nach Form und Größe sortiert werden. Hierbei können Siebe mit geeigneten Maschengrößen verwendet werden, um den Sortiervorgang durchzuführen. Der Schälvorgang erfolgt nach dem sogenannten Kaltverfahren, bei dem die Lupinensamen halbiert und nachfolgend von der Schale befreit werden. Im Anschluß daran wird das Kernfleisch der Samen zu scheibchenförmigen Flocken zerkleinert bzw. verformt, die in dieser Form einem indirekten Wärmeeintrag unter weitgehendem Ausschluß von Wasser ausgesetzt werden. Die Flockierung erfolgt vorzugsweise mittels Flockierwalzen die selbst eine Temperatur besitzen, die unterhalb der Denaturierungstemperatur der Lupinenproteine liegt, also weniger als 40°C beträgt.

Durch einen schonenden, indirekten Wärmeeintrag werden die in den Lupinensamen enthaltenen Enzyme inaktiviert, doch verbleiben die Proteine weitgehend in ihrer ursprünglichen Form und behalten ihre funktionellen Eigenschaften unverändert bei, da sie nicht in direktem Wasserkontakt treten, durch das die Proteine in ihren natürlichen Eigenschaften geschädigt würden.

Nun werden die Flocken erfindungsgemäß gezielt einem Entölungsprozeß unterzogen, bei dem ein Lösemittel eingesetzt wird, vorzugsweise Hexan, mit dem eine Extraktion der in den scheibchenförmigen Flocken enthaltener Lipide möglich ist. Insbesondere betreffen die extrahierten Lipide auch sämtliche in den Lupinensamen enthaltenen lipophile Alkaloide, die im Wege der Entölung isoliert werden können, so daß in den hexannassen, scheibchenförmigen Flocken lediglich lipophobe Alkaloide als Bitterstoffe vorhanden sind, die es gilt, in einem nachfolgenden Entbitterungsprozeß zu extrahieren. Vorzugsweise wird das hexannasse Mehl schonend, beispielsweise mit überkritischen Hexan, entbenziniert.

Als besonders vorteilhaft hat es sich erwiesen, die entölten Flocken einer indirekten Wärmebehandlung zu unterziehen, die beispielsweise mittels einer Wärmepfanne durchgeführt werden kann.

Zur Entbitterung werden die entbenzinierten, lipidreduzierten, scheibchenförmigen Flocken einem wässrigen Fraktionierungsprozeß unterzogen, der im wesentlichen aus zwei Prozeßstufen besteht:

Zunächst werden die entölten Flocken in ein wässrig saures Medium eingebracht, in dem sich alljene Substanzen lösen, die in den Flocken enthalten sind und im sauren Bereich gelöst werden können. Als Resultat wird ein wässrig saures Extrakt, das insbesondere die Alkaloide enthält, sowie ein sauer unlösliches, entbittertes Raffinat, im wesentlichen bestehend aus Flockensubstanz, erhalten.

Die auf diese Weise extrahierten Flocken, die auch als Mehl bezeichnet werden, können einer weiteren, nachfolgenden Extraktion mit dem Ziel einer Gewinnung von Proteinisolaten bzw. -konzentraten unterzogen werden. Auch bei der nachfolgenden Extraktion sind wässrige Systeme involviert, die in mehreren Stufen hintereinander geschaltet werden können. Eine Trennung zwischen der festen und flüssigen Phase kann mit Hilfe der Dekantation erfolgen, mit der man als Produkt den Proteinextrakt sowie proteinabgereicherte bzw. deren Kompartimente erhält, wobei sich in der übriggebliebenen Flockensubstanz der darin verbleibende Proteinanteil mit Hilfe bestimmter Verfahrensbedingungen, wie beispielsweise pH-Wert, Extraktionszeiten sowie Temperaturen, steuern läßt.

Wird das sauerunlösliche Raffinat in ein wässrig alkalisches Medium eingebracht, in dem all jene Stoffe gelöst werden, die im alkalischen Bereich, d.h. bei pH-Werten über 7,5 in Lösung gehen, so entsteht als Endresultat, das unmittelbar nach dem zweiten Prozeßschritt vorliegt, ein alkaloidreduziertes Raffinat erhalten, das sowohl befreit ist von jeglichen lipophilen Alkaloiden sowie von im sauren Bereich löslichen Alkaloiden.

### Kurze Beschreibung der Figuren

Die Erfindung wird nachstehend ohne Beschränkung des allgemeinen Erfindungsgedankens anhand von Ausführungsbeispielen unter Bezugnahme auf die Zeichnungen exemplarisch. Es zeigen:

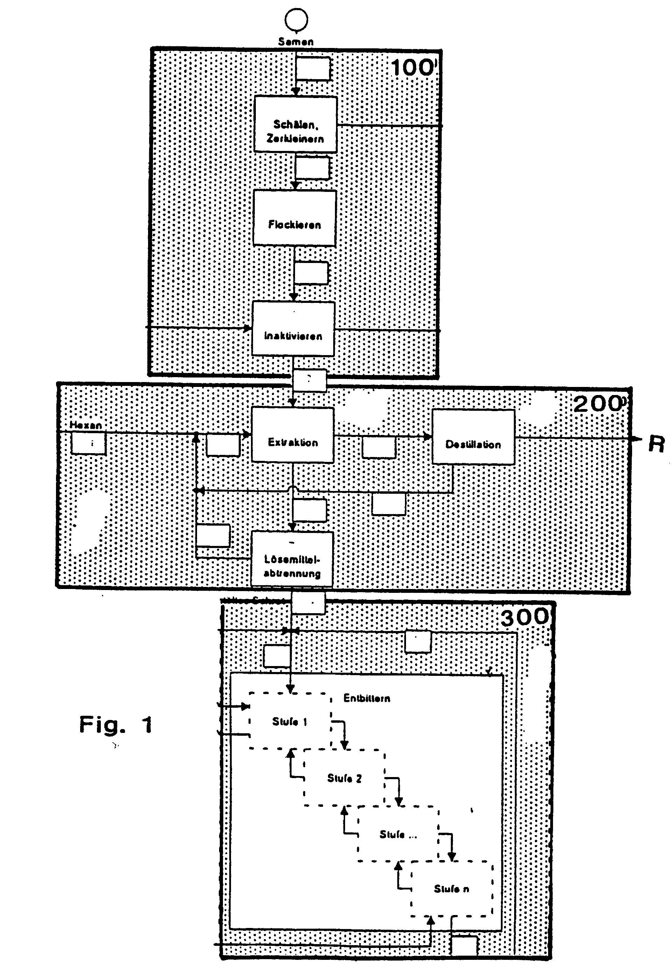

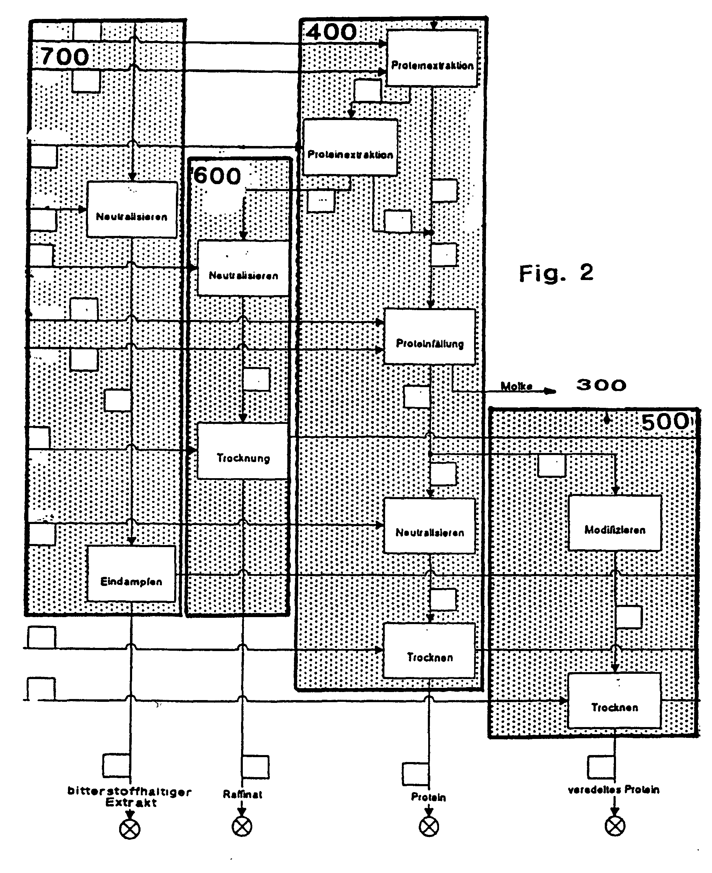

- Fig. 1, 2: Prozeßschema zur Entölung und Entbitterung von alkaloidhaltigem Lupinensamen.

### Wege der Ausführung und gewerbliche Anwendbarkeit

In Fig. 1 sind schematisch die ersten 3 Prozeßschritte in Blockdarstellung dargestellt. Im ersten Prozeßschritt 100 werden die Lupinensamen vorbereitet, im zweiten Prozeßschritt 200 erfolgt die Entölung, im dritten Prozeßschritt 300 findet die Entbitterung statt.

Ausgangspunkt des Verfahrens ist der Rohstoff Lupinensamen, der im Rahmen einer Vorbehandlung zerkleinert und geschält wird. Die auf diese Weise vereinzelten Lupinensamen werden nachfolgend vorzugsweise im Rahmen eines Walzvorganges flockiert, d.h. die Lupinensamen werden zu Samenbruchstücken verpreßt, die typischerweise eine Scheibchendicke zwischen 300 und 400 µm aufweisen. Bereits während des Walzens kann ein gezielter, indirekter Wärmeeintrag auf die Lupinensamen erfolgen, indem die eingesetzten Walzenrollen erwärmt sind. Auch sind Wärmepfannen einsetzbar, auf die der Lupinensamen gelangen kann. Durch diesen thermischen Wärmeeintrag werden saateigene Enzyme inaktiviert, wodurch spätere enzymatische Fettoxidationen, die zu ranzigen Geschmacken führen würden, ausgeschlossen werden können. Der in Flockenform gebrachte Lupinensamen, der überdies enzymatisch inaktiviert worden ist, wird nun einem nachfolgenden Entölungsprozeß 200 zugeführt, indem die Flocken Hexan als Lösemittel ausgesetzt werden, wodurch jegliche lipophile Stoffe, wie beispielsweise Triglycerine undRohlecithine, aber insbesondere lipophile Alkaloide, extrahiert werden können. Dies erfolgt typischerweise in einem Band- oder Karussellextrakteur. Die flüssige Phase wird einer Destillation unterzogen, in der zum einen das eingesetzte Lösemittel Hexan rückgewonnen wird und zur Wiederverwertung zur Verfügung steht, zum anderen kann das extrahierte Rohöl R in einem nicht in der Figur dargestellten weiteren Raffinationsverfahren gereinigt werden. Unter Verwendung von Aceton können weiterhin die Rohlecithine weiter veredelt werden.

Die nach dem Extraktionsvorgang bei der Entölung 200 anfallenden hexannassen, entölten Flocken werden auf möglichst schonende Weise vom Lösemittel abgetrennt, d.h. desolventisiert. Hierbei ist es besonders wesentlich, daß die Proteinlöslichkeit soweit als technisch möglich erhalten bleibt bzw. gezielt verändert werden kann. Unter wasserarmen Bedingungen werden hierzu die hexannassen Flocken desolventisiert, beispielsweise unter Verwendung eines überhitzten Lösemittels.

Die auf diese Weise vorbehandelten, entölten flockenartigen Lupinensamen werden nun in einem Entbitterungsschritt 300 von jeglichen noch in den Lupinensamen enthaltenen Alkaloiden befreit. In an sich bekannter Weise erfolgt die Lupinenentbitterung mehrstufig in einem wässrigen Entbitterungsprozeß, in dem die Alkaloidextraktion kontinuierlich, quasi kontinuierlich oder absatzweise erfolgen kann, wie es in der Darstellung gemäß Fig. 1 gezeigt ist.

Zunächst werden die entölten Flocken in ein saures Medium eingebracht, in dem all jene Substanzen und insbesondere Alkaloide gelöst werden, die in einem wässrig sauren Medium löslich sind, das vorzugweise eine Temperatur aufweist, die unter Raumtemperatur liegt. Dieser Verfahrensschritt erfolgt mehrstufig, wie es aus der Figur 1 dem Entbitterungsschritt 300 zu entnehmen ist. In jeder einzelnen Prozeßstufe erfolgt jeweils eine Abtrennung des in dieser Stufe vorliegenden wäßrigen Extraktes von dem sauerunlöslichen Raffinat, vorzugsweise zentrifugal mittels eines Dekanters. Hierbei wird der Dekanter gekühlt und im Bereich eines Feststofffängers mit Wasser oder dem wässrigen Extrakt gespült.

Als besonders vorteilhaft für eine verbesserte Abtrennung des wäßrigen Extraktes vom sauerunlöslichen Raffinat hat es sich erwiesen, eine gezielte Rückführung des wäßrigen Extraktes einer Prozeßstufe in die unmittelbar vorhergehende Prozeßstufe durchzuführen und ergänzend oder alternativ eine gezielte Abführung des wäßrigen Extraktes aus einer Prozeßstufe zu Erhöhung der Konzentration an sauerunlöslichem Raffinat zu unternehmen

So kann gezielt in einem Prozeßschritt, beispielsweise in der ersten Stufe, das Verhältnis zwischen sauerunlöslichem Raffinat und wäßrigem Extrakt kleiner als 10:1 eingestellt werden, indem ein Teil des wäßrigen Extraktes des unmittelbar darauffolgenden Prozeßschrittes, bspw. wäßriger Extrakt aus der zweiten Stufe, zugemischt wird, um eine möglichst hohe Konzentration der im wäßrigen Extrakt gelösten Komponenten zu erhalten. Ebenso kann das Verhältnis zwischen sauerunlöslichem Raffinat und wäßrigem Extrakt, bspw. in der zweiten Prozeßstufe, größer als 10:1 eingestellt werden, indem innerhalb dieser Prozeßsstufe ein Teil des wäßrigen Extraktes ausgeschleust wird. Somit können die Konzentrationsgradienten für die zu lösenden Komponenten innerhalb der wässrigen Phase erhöht und die Extraktion beschleunigt werden. Um einen Teil des wäßrigen Extraktes auszuschleusen wird ein Stromteiler eingesetzt. Der ausgeschleuste Teilstrom kann anderweitig verwendet oder verworfen werden.

Die auf diesse Weise behandelten Flocken gelangen anschließend gemäß Fig. 2 zur Proteinextraktion 400, in der die Flocken beispielsweise wiederholt einem alkalischen Medium, das auf Temperaturen höher als Raumtemperatur temperiert ist, vorzugsweise zwischen 35 °C und 45 °C, ausgesetzt werden, indem eine Fraktionierung zwischen Raffinat und Proteinextrakten erfolgt. Aus dem Proteinextrakt kann in sauren Medien eine Proteinfällung durchgeführt werden. Die bei der Proteinfällung anfallende Molke, deren pH-Wert dem sauren Medium zur Entbitterung der Lupinensamen im Rahmen der Entbitterungsstufe 300 entspricht, kann in einem geschlossenen Kreislauf dem Entbitterungsprozeß 300 wieder zugeführt werden.

Die bei der Fraktionierung gewonnene Molke sowie der Proteinquark weist mehr als 85 % Protein in der Trockensubstanz auf, wobei die Molke vorzugsweise mittels eines Dekanters gewonnen wird. Anschließend wird die gewonnene Molke mit einem Separator nachgeklärt und thermisch behandelt. Vorzugsweise wird die Molke ein zweites mal in einem Separator geklärt.

Die auf diese Weise zweifach geklärte Molke wird dem Prozeß wieder zugeführt, wobei der gewonnene Feststoff bei der ersten Separation im Proteinstrang weiterverarbeitet und der bei der zweiten Separation gewonnene Feststoff ausgeschleust wird.

Der proteinreduzierte Rückstand wird als Stoffstrom zur Ballaststoffaufbereitung zum Erhalt eines Raffinats im Bereich der Ballaststoffaufbereitung 600, in der die Flocken durch entsprechenden Säureeintrag neutralisiert und anschließend getrocknet. Zum anderen kann der bei der Proteinfällung anfallende Proteinextrakt durch entsprechendes Neutralisieren unter Zugabe alkalischer Medien und nachfolgender Trocknung unmittelbar zum Proteinprodukt führen. Alternativ können Teile des Proteinextraktes im Prozeßschritt 500 durch entsprechende thermische Wärmebehandlung bzw. gezielte Applikation von Hochfrequenzfeldern in ihren funktionellen Eigenschaften modifiziert werden und auf diese Weise nach erfolgter Trocknung zu einem veredelten Proteinprodukt führen.

Neben dem Erhalt der Produkte des Raffinats, das den Ballaststoffen entspricht, sowie den Proteinprodukten, können dem Entbitterungsprozeß auch gezielt Bitterstoffextrakte abgewonnen werden, die im Rahmen einer Bitterextraktaufbereitung 700 beispielsweise als bitterstoffhaltiges Extrakt anfallen. Hierzu werden dem Entbitterungsprozeß 300 gezielt Bitterextrakte entnommen, die nach entsprechenden Behandlungsschritten, wie beispielsweise Feinstoffabtrennung, Neutralisierungs- und Eindampfvorgang zu dem Endprodukt führen.

Es besteht auch die Möglichkeit, dem bitterstoffhaltigen Extrakt mit den in Prozeßschritt 100 abgetrennten Schalen zu vermischen. Das so hergestellte, auf Schalen fixierte Extrakt kann anschließend getrocknet werden.

Der wesentliche Aspekt des vorgestellten erfindungsgemäßen Verfahrens zur Behandlung und Verarbeitung alkaloid-, öl- und proteinhaltiger Lupinensamen besteht darin, daß die im Rahmen des Entwicklungsprozesses sehr schlecht zu extrahierenden lipophilen Alkaloide bereits in einem vorgeschalteten Entölungsvorganges den Lupinensamen entzogen worden sind. Auf diese Weise kann weitgehend vollständig ausgeschlossen werden, daß in den am Ende des Verfahrens gewonnenen Produkten Alkaloide vorhanden sind. Ebenso trägt erfindungsgemäß die Zerkleinerung der Lupinensamen in Flockenform dazu bei, daß zum einen die in den Lupidsamen enthaltenen Bitterstoffe vollständig aus dem Samen entweichen können, zum anderen ist eine technisch leichte Trennbarkeit zwischen flüssiger und fester Phase leicht möglich. Zudem ist das Extrahierverhalten der Alkaloide in wäßrigen Systemen durch die Entfernung der lipophilen Saatbestandteile erheblich verbessert. Dies wirkt sich insbesondere auf die notwendigen Verweilzeiten in den verschiedenen Extraktionsstufen aus.

### BEZUGSZEICHENLISTE

- 100: Samenvorbehandlung, Flockierung, Inaktivierung
- 200: Entölung
- 300: Entbitterung
- 400: Proteingewinnung
- 500: Proteinveredlung
- 600: Raffinataufbereitung
- 700: Bitterstoffaufbereitung

## Patentansprüche

1. Verfahren zur Behandlung und Verarbeitung alkaloid-, öl- und proteinhaltiger Lupinensamen zur Gewinnung von Produkten aus den Lupinensamen mittels gezielter Fraktionierung,
**gekennzeichnet durch** die Kombination folgender Schritte:
- Zerkleinerung und/oder Verformung der Lupinensamen in scheibchenförmige Flocken,
- Indirekter Wärmeeintrag in die scheibchenförmigen Flocken unter weitgehendem Ausschluß von Wasser,
- Entölung der scheibchenförmigen Flocken mittels Eintrag eines Lösemittels, zum Erhalt von Lipiden und lipidreduzierten Flocken,
Entbitterung der lipidreduzierten Flocken mittels wäßrigen Entbitterungsprozeß zum Erhalt eines alkaloidreduzierten Raffinats und einem wäßrigen Extrakts.

2. Verfahren nach Anspruch 1,
**dadurch gekennzeichnet, daß** die Zerkleinerung der Pflanzensamen nach erfolgtem Vorbrechen der den Pflanzensamen enthaltenen geschälten oder ungeschälten Saat mittels einer Flockierwalze durchgeführt wird.

3. Verfahren nach Anspruch 1 oder 2,
**dadurch gekennzeichnet, daß** die Lupinensamen vor der Zerkleinerung und/oder Verformung nach Form und Größe sortiert und nachfolgend geschält werden.

4. Verfahren nach einem der Ansprüche 1 bis 3,
**dadurch gekennzeichnet, daß** der Schälvorgang nach einem sogenannten Kaltverfahren erfolgt, bei dem die Lupinensamen halbiert und von den Schalen getrennt werden.

5. Verfahren nach einem der Ansprüche 1 bis 4,
**dadurch gekennzeichnet, daß** die Flockierung mittels Flockierwalzen erfolgt, die eine Temperatur unter der Denaturierungstemperatur der Lupinenproteine, vorzugsweise unter 40 °C, aufweisen.

6. Verfahren nach einem der Ansprüche 1 bis 5,
**dadurch gekennzeichnet, daß** die scheibchenförmigen Flocken eine Scheibchendicke von weniger 1 mm, vorzugsweise 200-400 µm aufweisen.

7. Verfahren nach einem der Ansprüche 1 bis 6,
**dadurch gekennzeichnet, daß** durch den indirekten Wärmeeintrag saateigene Enzyme inaktiviert werden, wobei die Proteine ihre nativen Eigenschaften weitestgehend beibehalten.

8. Verfahren nach Anspruch 7,
**dadurch gekennzeichnet, daß** der indirekte Wärmeeintrag mittels vorgewärmter Flockierwalzen erfolgt, durch die der Pflanzensamen zerkleinert und direkt erwärmt wird.

9. Verfahren nach einem der Ansprüche 1 bis 8,
**dadurch gekennzeichnet, daß** als Lösemittel zur Entölung der scheibchenförmigen Flocken technisches Hexan, Pentan, Hexan, Heptan oder überkritisches CO₂ verwendet wird.

10. Verfahren nach einem der Ansprüche 1 bis 9,
**dadurch gekennzeichnet, daß** die entölten scheibchenförmigen Flocken unter wasserarmen oder wasserfreien Bedingungen desolventisiert werden.

11. Verfahren nach Anspruch 10,
**dadurch gekennzeichnet, daß** die Desolventisierung mit einem überhitzen Lösemittel durchgeführt wird, das vorzugsweise Hexan oder technisches Hexan ist.

12. Verfahren nach einem der Ansprüche 1 bis 11,
**dadurch gekennzeichnet, daß** der indirekte Wärmeeintrag in die bereits entölten Flocken mittels einer Wärmepfanne erfolgt.

13. Verfahren nach einem der Ansprüche 10 bis 12,
**dadurch gekennzeichnet, daß** die entölten und desolventisierten Flocken dem Entbitterungsprozeß zugeführt werden, der folgende zwei Verfahrenstufen vorsieht:
- in einer ersten Verfahrensstufe werden die Flocken in ein wässrig saures Medium eingebracht zum Abtrennen von im sauren Medium löslichen Substanzen zum Erhalt eines wäßrigen Extraktes sowie eines sauerunlöslichen Raffinates,
- in einer zweiten Verfahrensstufe wird das sauerunlösliche Raffinat in ein wässrig alkalisches Medium eingebracht zum Erhalt von wäßrigen Extrakten sowie von alkalisch und sauerunlöslichen Raffinaten.

14. Verfahren nach Anspruch 13,
**dadurch gekennzeichnet, daß** das wässrig saure Medium in der ersten Verfahrensstufe eine Temperatur kleiner Raumtemperatur aufweist.

15. Verfahren nach Anspruch 13 oder 14,
**dadurch gekennzeichnet, daß** die Abtrennung des wäßrigen Extraktes von dem sauerunlöslichen Raffinats zentrifugal mittels eines Dekanters durchgeführt wird, und daß der Dekanter gekühlt und im Bereich des Feststofffängers mit Wasser oder dem Extrakt gespült wird.

16. Verfahren nach einem der Ansprüche 13,
**dadurch gekennzeichnet, daß** im zweiten Verfahrensschritt die Temperatur bei der Extraktion im wäßrigen alkalischen Medium höher als Raumtemperatur ist, vorzugsweise zwischen 35 °C und 45 °C liegt.

17. Verfahren nach einem der Ansprüche 13 bis 16,
**dadurch gekennzeichnet, daß** die erste Verfahrensstufe in einem mehrstufig, wässrig saurem Prozeß erfolgt,
daß in einem Prozeßschritt zur Einstellung eines Verhältnisses zwischen sauerunlöslichem Raffinat und wäßrigem Extrakt von kleiner als 10:1 ein Teil des wäßrigen Extraktes des unmittelbar darauffolgenden Prozeßschrittes zugemischt wird.

18. Verfahren nach Anspruch 17,
**dadurch gekennzeichnet, daß** zum Einstellen eines Verhältnisses zwischen sauerunlöslichem Raffinat und wäßrigem Extrakt von größer als 10:1 innerhalb des unmittelbar darauffolgenden Prozeßschrittes ein Teil dieses wäßrigen Extraktes ausgeschleust wird.

19. Verfahren nach einem der Ansprüche 13 bis 18,
**dadurch gekennzeichnet, daß** der wäßrige Extraktionsprozeß einen geschlossenen Kreislauf aufweist, der folgende Prozeßstufen vorsieht:
- die entölten Flocken werden bei einem pH-Wert von ca. 3,5 - 5,5 zur Extraktion von Alkaloiden in Wasser suspendiert,
- zur Proteingewinnung werden die suspendierten Flocken, der sogenannte Proteinextrakt, mit einer Lauge bei einem pH-Wert zwischen 6,5 - 8,5 vermengt,
- die Suspension wird mittels eines Dekanters in Raffinat und Proteinextrakt getrennt,
- dem Proteinextrakt wird wieder ein saures Medium zugeführt, so daß eine Fraktionierung von Molke und Proteinquark erhalten wird, und
- die Molke wird vollständig wieder den vorextrahierten Flocken bei einem pH- Wert von ca. 3,5 - 5,5 zugeführt.

20. Verfahren nach Anspruch 19,
**dadurch gekennzeichnet**, die Trennung von Molke und Proteinquark, der mehr als 85 % Protein in der Trockensubstanz, vorzugsweise mehr als 90 % Protein in der Trocckensubstanz, aufweist mittels eines Dekanters erfolgt.

21. Verfahren nach Anspruch 20,
**dadurch gekennzeichnet, daß** die gewonnene Molke mit einem Separator nachgeklärt wird, anschließend thermisch behandelt und danach ein zweites mal in einem Separator geklärt wird.

22. Verfahren nach Anspruch 21,
**dadurch gekennzeichnet, daß** die zweifach geklärte Molke dem Prozeß wieder zugeführt wird, wobei der gewonnene Feststoff bei der ersten Separation im Proteinstrang weiterverarbeitet wird und der bei der zweiten Separation gewonnene Feststoff ausgeschleust wird.

23. Verfahren nach einem der Ansprüche 19 bis 22,
**dadurch gekennzeichnet, daß** die Proteingewinnung in mehreren pH-Stufen erfolgt und so eine Proteinfraktionierung stattfindet.

24. Verfahren nach einem der Ansprüche 19 und 23,
**dadurch gekennzeichnet, daß** der proteinreduzierte Rückstand einen Proteingehalt kleiner 20% in Trockensubstanz aufweist und der Ballaststoffgehalt größer 60%, vorzugsweise größer 70 % und der Gehalt an löslichen Kohlenhydraten unter 5 % vorzugsweise unter 1% beträgt.

25. Verfahren nach einem der Ansprüche 2 bis 24,
**dadurch gekennzeichnet, daß** die vor der Entölung abgetrennten Schalen mit dem bei pH-Werten von 3,5 bis 5,5 extrahierten alkaloidhaltigen wässrigem Extrakt vermischt und getrocknet werden.

## Claims

1. Method for treating and processing lupine seeds containing alkaloid, oil and protein in order to extract products from the lupine seeds by means of targeted fractionation,
**characterised by** the combination of the following steps:
- size reduction and/or deformation of the lupine seeds into discoid flakes,
- indirect supply of heat to the discoid flakes with extensive exclusion of water,
- deoiling of the discoid flakes by means of the supply of a solvent in order to obtain lipids and lipid-reduced flakes,
- debittering of the lipid-reduced flakes by means of an aqueous debittering process in order to obtain an alkaloid-reduced raffinate and an aqueous extract.

2. Method according to claim 1,
**characterised in that** the size reduction of the plant seeds is implemented by means of a flaking roller after crushing of the shelled or unshelled crop which contains the plant seed has been effected.

3. Method according to claim 1 or 2,
**characterised in that** the lupine seeds are sorted according to shape and size before the size reduction and/or deformation and are subsequently shelled.

4. Method according to one of the claims 1 to 3,
**characterised in that** the shelling process is effected according to a so-called cold method, in which the lupine seeds are halved and separated from the shells.

5. Method according to one of the claims 1 to 4,
**characterised in that** the flaking is effected by means of flaking rollers which have a temperature below the denaturation temperature of the lupine proteins, preferably below 40°C.

6. Method according to one of the claims I to 5,
**characterised in that** the discoid flakes have a disc thickness of less than 1 mm, preferably 200 - 400 mm.

7. Method according to one of the claims 1 to 6,
**characterised in that,** by means of the indirect supply of heat, enzymes inherent in the crop are inactivated, the proteins retaining their native properties to the greatest extent.

8. Method according to claim 7,
**characterised in that** the indirect supply of heat is effected by means of preheated flaking rollers, via which the plant seed is reduced in size and directly heated.

9. Method according to one of the claims 1 to 8,
**characterised in that** commercial hexane, pentane, hexane, heptane or supercritical CO₂ is used as the solvent for the deoiling of the discoid flakes.

10. Method according to one of the claims 1 to 9,
**characterised in that** the solvent is removed from the deoiled discoid flakes in low-moisture or moisture-free conditions.

11. Method according to claim 10,
**characterised in that** the solvent removal is implemented with a superheated solvent which is preferably hexane or commercial hexane.

12. Method according to one of the claims 1 to 11,
**characterised in that** the indirect supply of heat to the already deoiled flakes is effected by means of a heating vat.

13. Method according to one of the claims 10 to 12,
**characterised in that** the deoiled flakes which have had the solvent removed are supplied to the debittering process which provides the following two method steps:
- in a first method step, the flakes are placed in an aqueously acidic medium in order to remove substances which are soluble in the acidic medium in order to obtain an aqueous extract and a raffinate which is insoluble in acid,
- in a second method step, the raffinate which is insoluble in acid is placed in an aqueously alkaline medium in order to obtain aqueous extracts and raffinates which are alkaline and insoluble in acid.

14. Method according to claim 13,
**characterised in that** the aqueously acidic medium in the first method step has a temperature which is lower than room temperature.

15. Method according to claim 13 or 14,
**characterised in that** the removal of the aqueous extract from the raffinate which is insoluble in acid is implemented centrifugally by means of a decanter and
**in that** the decanter is cooled and rinsed with water or the extract in the region of the solid matter collector.

16. Method according to one of the claims 13,
**characterised in that,** in the second method step, the temperature during the extraction in the aqueous alkaline medium is higher than room temperature, preferably between 35°C and 45°C.

17. Method according to one of the claims 13 to 16,
**characterised in that** the first method step is effected in a multi-stage aqueously acidic process,
**in that**, in a process step for setting a ratio smaller than 10 : 1 between the raffinate, which is insoluble in acid, and the aqueous extract, a portion of the aqueous extract of the immediately subsequent process step is added.

18. Method according to claim 17,
**characterised in that,** in order to set a ratio greater than 10 : 1 between the raffinate, which is insoluble in acid, and the aqueous extract, a portion of this aqueous extract is extracted within the immediately subsequent process step.

19. Method according to one of the claims 13 to 18,
**characterised in that** the aqueous extraction process has a closed cycle, which provides the following process steps:
- the deoiled flakes are suspended in water at a pH value of approximately 3.5 - 5.5 in order to extract the alkaloids,
- in order to obtain the protein, the suspended flakes, the so-called protein extract, are blended with a caustic solution at a pH value between 6.5 - 8.5,
- the suspension is separated into raffinate and protein extract by means of a decanter,
- an acidic medium is again supplied to the protein extract, so that a fractionation of whey and protein curd is obtained, and
- the whey is again supplied completely to the pre-extracted flakes at a pH value of approximately 3.5 - 5.5.

20. Method according to claim 19,
**characterised in that** the separation of whey and protein curd, which has more than 85% protein in the dry substance, preferably more than 90% protein in the dry substance, is effected by means of a decanter.

21. Method according to claim 20,
**characterised in that** the obtained whey is clarified subsequently with a separator, then thermally treated and after that clarified in a separator for a second time.

22. Method according to claim 21,
**characterised in that** the twice-clarified whey is again supplied to the process, the solid matter which is obtained during the first separation being further processed into the protein strand and the solid matter which is obtained during the second separation being extracted.

23. Method according to one of the claims 19 to 22,
**characterised in that** obtaining of the protein is effected in a plurality of pH steps and thus a protein fractionation occurs.

24. Method according to one of the claims 19 and 23,
**characterised in that** the protein-reduced residue has a protein content of less than 20% in dry substance and the bulk content is greater than 60%, preferably greater than 70% and the content of soluble carbohydrates is below 5%, preferably below 1%.

25. Method according to one of the claims 2 to 24,
**characterised in that** the shells which are removed before the deoiling are mixed with the alkaloid-containing aqueous extract, which is extracted at pH values of 3.5 to 5.5, and are dried.

## Revendications

1. Procédé de traitement et de transformation de graines de lupin qui contiennent des alcaloïdes, de l'huile et des protéines en vue de l'obtention de produits provenant des graines de lupin, à l'aide d'un fractionnement ciblé,
**caractérisé par** la combinaison des étapes suivantes :
- broyage et/ou déformation des graines de lupin en flocons en forme de tranches,
- introduction indirecte de chaleur dans les flocons en forme de tranches en évacuant largement l'eau,
- déshuilage des flocons en forme de tranches à l'aide de l'introduction d'un solvant pour obtenir des lipides et des flocons à teneur réduite en lipides, élimination de l'amertume des flocons à teneur réduite en lipides, à l'aide d'un processus aqueux d'élimination de l'amertume, en vue d'obtenir un produit de raffinage à teneur réduite en alcaloïdes et un extrait aqueux.

2. Procédé selon la revendication 1,
**caractérisé en ce que**
le broyage des graines de plantes est effectué, après cassure préalable réalisée des graines décortiquées ou non décortiquées contenues dans les graines de plantes, à l'aide de cylindres de floconnage

3. Procédé selon la revendication 1 ou la revendication 2,
**caractérisé en ce que**
les graines de lupin sont triées avant le broyage et/ou la déformation, selon la forme et la taille et ensuite sont décortiquées.

4. Procédé selon l'une quelconque des revendications 1 à 3,
**caractérisé en ce que**
le processus de décorticage s'effectue selon un procédé dénommé procédé à froid, dans lequel les graines de lupin sont coupées en deux et sont séparées des coques.

5. Procédé selon l'une quelconque des revendications 1 à 4,
**caractérisé en ce que**
le floconnage s'effectue à l'aide de cylindres de floconnage qui possèdent une température inférieure à la température de dénaturation des protéines de lupin, de préférence en dessous de 40°C.

6. Procédé selon l'une quelconque des revendications 1 à 5,
**caractérisé en ce que**
les flocons en forme de tranches possèdent une épaisseur de tranche de moins de 1 mm, de préférence de 200 à 400 µm.

7. Procédé selon l'une quelconque des revendications 1 à 6,
**caractérisé en ce que**
par introduction de chaleur indirecte les enzymes spécifiques aux graines, sont inactivées, à cause de quoi les protéines conservent le plus largement leurs propriétés naturelles.

8. Procédé selon la revendication 7,
**caractérisé en ce que**
l'introduction indirecte de chaleur s'effectue à l'aide de cylindres de floconnage préchauffés grâce auxquels on broie et on chauffe directement les graines de plantes.

9. Procédé selon l'une quelconque des revendications 1 à 8,
**caractérisé en ce que**
comme solvant pour le déshuilage des flocons en forme de tranches on utilise l'hexane, industriel, le pentane, l'hexane, l'heptane ou le CO₂ supercritique.

10. Procédé selon l'une quelconque des revendications 1 à 9,
**caractérisé en ce que**
les flocons en forme de tranches déshuilés sont désolvatés dans des conditions peu aqueuses ou anhydres.

11. Procédé selon la revendication 10,
**caractérisé en ce que**
la dessolvatation est exécutée avec un solvant surchauffé qui est de préférence de l'hexane ou de l'hexane technique.

12. Procédé selon l'une quelconque des revendications 1 à 11,
**caractérisé en ce que**
l'introduction indirecte de chaleur dans les flocons déjà déshuilés s'effectue à l'aide d'une poche de chaleur.

13. Procédé selon l'une quelconque des revendications 10 à 12,
**caractérisé en ce que**
les flocons déshuilés et dessolvatés sont amenés au processus d'élimination de l'amertume, qui prévoit les deux étapes de procédé suivantes :
- dans une première étape de procédé on introduit les flocons dans un milieu acide aqueux en vue de la séparation des substances solubles en milieu acide, pour obtenir un extrait aqueux ainsi qu'un produit de raffinage insoluble dans les acides,
- dans une deuxième étape de procédé, le produit de raffinage insoluble dans les acides est introduit dans un milieu alcalin aqueux pour obtenir des extraits aqueux ainsi qu'un produit de raffinage alcalin et insoluble dans les acides.

14. Procédé selon la revendication 13,
**caractérisé en ce que**
le milieu acide aqueux possède dans la première étape de procédé une température inférieure à la température ambiante.

15. Procédé selon la revendication 13 ou 14
**caractérisé en ce que**
la séparation de l'extrait aqueux du produit de raffinage insoluble dans les acides est effectuée par centrifugation à l'aide d'un décanteur et **en ce que** le décanteur est refroidi et est rincé dans la zone du capteur de matières solides, avec de l'eau ou de l'extrait.

16. Procédé selon la revendication 13,
**caractérisé en ce que**
dans le second stade de procédé, la température au cours de l'extraction dans le milieu alcalin aqueux est plus élevée que la température ambiante et de préférence se situe entre 35°C et 45°C.

17. Procédé selon l'une quelconque des revendications 13 à 16,
**caractérisé en ce que**
la première étape de procédé s'effectue dans un processus à plusieurs étapes, acide, aqueux, **en ce que** dans un premier stade de processus en vue d'ajuster un rapport entre le produit de raffinage insoluble dans les acides et l'extrait aqueux, inférieur à 10 : 1, une partie de l'extrait aqueux est mélangé au stade de processus immédiatement consécutif.

18. Procédé selon la revendication 17,
**caractérisé en ce que**
pour ajuster un rapport entre le produit de raffinage insoluble dans les acides et l'extrait aqueux supérieur à 10 : 1, à l'intérieur du stade de processus immédiatement consécutif, une partie de cet extrait aqueux est évacuée.

19. Procédé selon l'une quelconque des revendications 13 à 18,
**caractérisé en ce que**
le processus d'extraction aqueux possède un circuit fermé qui prévoit les étapes de processus suivantes :
- les flocons déshuilés sont mis en suspension à une valeur de pH d'environ 3,5-5,5 en vue de l'extraction des alcaloïdes dans l'eau,
- en vue de la production de protéines, on mélange les flocons mis en suspension de ce qu'on appelle l'extrait protéique, avec une lessive à une valeur de pH comprise entre 6,5 et 8,5,
- on sépare la suspension à l'aide d'un décanteur en produit de raffinage et extrait protéique,
- on amène à l'extrait protéique à nouveau un milieu acide, de façon à obtenir un fractionnement du petit lait et du caillebotte de protéine et,
- on amène le petit lait complètement à nouveau aux flocons pré-extraits à une valeur de pH d'environ 3,5 à 5,5.

20. Procédé selon la revendication 19,
**caractérisé en ce que**
la séparation du petit lait et du caillebotte de protéine, qui possède plus de 85 % de protéines dans la substance sèche, de préférence plus de 90 % de protéines dans la substance sèche, s'effectue à l'aide d'un décanteur.

21. Procédé selon la revendication 20,
**caractérisé en ce que**
le petit lait produit est re-clarifié avec un séparateur, ensuite traité thermiquement et ensuite clarifié une deuxième fois dans un séparateur.

22. Procédé selon la revendication 21,
**caractérisé en ce que**
le petit lait deux fois clarifié est ramené à nouveau au processus, dans lequel la matière solide produite dans la première séparation est transformée à nouveau en un filament de protéine et la matière solide produite à la deuxième séparation est évacuée.

23. Procédé selon l'une des revendications 19 à 22,
**caractérisé en ce que**
la production de protéines s'effectue à plusieurs stades de pH et ainsi il se produit un fractionnement des protéines.

24. Procédé selon l'une des revendications 19 et 23,
**caractérisé en ce que**
le résidu à faible teneur en protéines possède une teneur en protéines inférieure à 20 % dans la substance sèche et la teneur en substance de ballast est supérieure à 60 %, de préférence supérieure à 70 % et la teneur en hydrates de carbone solubles s'élève à moins de 5 %, de préférence moins de 1 %.

25. Procédé selon l'une quelconque des revendications 2 à 24,
**caractérisé en ce que**
les coquilles séparées avant le déshuilage sont mélangées à l'extrait aqueux contenant des alcaloïdes extrait à des valeurs de pH allant de 3,5 à 5,5 et sont séchées.
